# EUROPÄISCHE PATENTSCHRIFT

(11) **EP 2 643 620 B1**
(45) Veröffentlichungstag und Bekanntmachung des Hinweises auf die Patenterteilung: **12.03.2014**
(21) Anmeldenummer: 11773414.5
(22) Anmeldetag: 21.10.2011
(51) Int. Cl.: F16K 31/10, F15B 13/00

(54) **VENTILEINRICHTUNG**
VALVE DEVICE
DISPOSITIF FORMANT SOUPAPE

(43) Veröffentlichungstag der Anmeldung: 02.10.2013
(73) Patentinhaber: FESTO AG & Co. KG, 73734 Esslingen (DE)
(72) Erfinder: BRENNER, Jakob, D-73730 Esslingen (DE)
(74) Vertreter: Abel, Martin
(86) Internationale Anmeldenummer: PCT/EP2011/005318
(87) Internationale Veröffentlichungsnummer: WO 2013/056724

(56) Entgegenhaltungen:
- DE-A1-102008 005 834
- US-A- 5 623 968
- US-A1- 2003 131 896

## Beschreibung

Die Erfindung betrifft eine Ventileinrichtung, mit einem durch elektrische Ansteuerung betätigbaren Ventil, das zur manuellen Betätigung mit einer Handhilfsbetätigungseinrichtung ausgestattet ist, die einen beweglich in einem Gehäuseteil der Ventileinrichtung angeordneten Betätigungsstößel aufweist, der über einen von außerhalb des Gehäuseteils zugänglichen Betätigungsendabschnitt verfügt und der zum einen durch eine Verschiebebewegung des Betätigungsendabschnittes zwischen einer unbetätigten Grundstellung und einer betätigten Arbeitsstellung umschaltbar ist und zum anderen durch eine Drehbewegung des Betätigungsendabschnittes in der Arbeitsstellung lösbar verriegelbar ist, und mit einer ein manuell betätigbares Zusatz-Betätigungsglied aufweisenden Zusatz-Betätigungseinheit, die unter Einnahme einer Gebrauchsstellung derart außen an dem Gehäuseteil anbringbar oder angeordnet ist, dass das Zusatz-Betätigungsglied mit dem Betätigungsendabschnitt des Betätigungsstößels antriebsmäßig derart gekoppelt oder koppelbar ist, dass durch Betätigung des Zusatz-Betätigungsgliedes die Verschiebebewegung des Betätigungsendabschnittes hervorrufbar ist.

Eine aus der DE 10 2008 005 834 A1 bekannte Ventileinrichtung dieser Art ist von elektrisch vorgesteuerter Bauart und enthält ein elektrisch betätigbares Vorsteuerventil, durch das der Betriebszustand eines zugeordneten Hauptventils vorgebbar ist. Das Vorsteuerventil ist als Magnetventil ausgebildet und im Normalbetrieb der Ventileinrichtung elektrisch betätigbar. Darüber hinaus ist dem Vorsteuerventil aber auch noch eine Handhilfsbetätigungseinrichtung zugeordnet, die bei nicht vorhandener elektrischer Energie eine manuelle Betätigung gestattet. Die Handhilfsbetätigungseinrichtung enthält einen Betätigungsstößel mit einem von außen her zugänglichen Betätigungsendabschnitt, der mit einer Drückkraft tastend beaufschlagt werden kann, um den Betätigungsstößel aus einer Grundstellung in eine Arbeitsstellung umzuschalten, in der er auf ein Ventilglied des Vorsteuerventils einwirkt und dieses in eine Offenstellung umschaltet. Beim Wegnehmen der drückenden Betätigungskraft kehrt der Betätigungsstößel aufgrund einer auf ihn einwirkenden Rückstellfeder wieder in die Grundstellung zurück. Die bekannte Handhilfsbetätigungseinrichtung ermöglicht es darüber hinaus, das Ventilglied für längere Zeit ohne elektrische Unterstützung in seiner Offenstellung zu halten. Hierzu kann der Betätigungsstößel durch Verdrehen des Betätigungsendabschnittes in der Arbeitsstellung lösbar verriegelt werden. Das hierzu erforderliche Drehmoment wird in den stirnseitig zugänglichen Betätigungsendabschnitt eingeleitet, der einen das Ansetzen eines Schraubendrehers erlaubenden Querschlitz aufweist. Das Hervorrufen der Drehbewegung zwecks Verriegelung des Betätigungsstößels erfordert also notgedrungen den Einsatz eines Schraubwerkzeuges.

Die Drehbetätigung zwecks verriegelung des Betätigungsstößels ist nur so lange möglich, wie noch keine als Sicherheitsabdeckung fungierende Zusatz-Betätigungseinheit montiert ist. Diese Zusatz-Betätigungseinheit enthält ein dem Betätigungsendabschnitt des Betätigungsstößels vorgelagertes Zusatz-Betätigungsglied, das rein tastend aktivierbar ist, um durch Einwirkung auf den Betätigungsendabschnitt den Betätigungsstößel zu verschieben. Die Sicherheitsabdeckung ist so gestaltet, dass der Querschlitz des Betätigungsendabschnittes nicht zugänglich ist, so dass bei montierter Sicherheitsabdeckung nur eine Verschiebebetätigung des Betätigungsstößels hervorgerufen werden kann. Auf diese Weise kann ein unbeabsichtigtes beziehungsweise unerwünschtes Verdrehen und mithin Verriegeln des Betätigungsstößels in der Arbeitsstellung verhindert werden.

Soll bei der bekannten Ventileinrichtung sowohl eine Verschiebebetätigung als auch eine Drehbetätigung des Betätigungsstößels gewährleistet werden, ist dies nur bei abgenommener Sicherheitsabdeckung möglich. Allerdings kann in diesem Fall die Drehbetätigung nur mittels eines in den Querschlitz des versenkt im Vorsteuerventil angeordneten Betätigungsendabschnittes eingreifenden Schraubwerkzeuges bewerkstelligt werden.

Der Erfindung liegt die Aufgabe zugrunde, bei einer Ventileinrichtung der eingangs genannten Art Maßnahmen vorzusehen, die bei Bedarf ohne Einsatz eines Werkzeuges ein Verriegeln des in die Arbeitsstellung verschobenen Betätigungsstößels ermöglichen.

Zur Lösung dieser Aufgabe ist erfindungsgemäß vorgesehen, dass das Zusatz-Betätigungsglied in der Gebrauchsstellung der Zusatz-Betätigungseinheit in einer Weise antriebsmäßig mit dem Betätigungsendabschnitt des Betätigungsstößels gekoppelt oder koppelbar ist, dass durch manuelle, werkzeuglose Betätigung des Zusatz-Betätigungsgliedes sowohl die Verschiebebewegung als auch die Drehbewegung des Betätigungsendabschnittes hervorrufbar ist.

Auf diese Weise besteht die Möglichkeit, eine Ventileinrichtung, deren Handhilfsbetätigungseinrichtung prinzipbedingt zumindest zur Verriegelung der Arbeitsposition ein Betätigungswerkzeug erfordert, mit einer Zusatz-Betätigungseinheit auszustatten, mit der sowohl die Verschiebebewegung als auch die Drehbewegung des Betätigungsstößels ohne Werkzeug manuell ausgeführt werden kann. Die Zusatz-Betätigungseinheit ist mit einem Zusatz-Betätigungsglied ausgestattet, das problemlos so gestaltet werden kann, dass es sich sowohl zum Umschalten des Betätigungsstößels zwischen der Grundstellung und der Arbeitsstellung als auch zum Verriegeln der Arbeitsstellung bequem mit den Fingern einer Hand ergreifen und betätigen lässt. Insbesondere kann das Zusatz-Betätigungsglied als von der Ventileinrichtung vorstehendes beziehungsweise wegragendes Bauteil realisiert werden, während der Betätigungsendabschnitt des Betätigungsstößels insbesondere nicht nach außen vorsteht, so dass dessen unmittelbare Drehbetätigung bei nicht vorhandener Zusatz-Betätigungseinheit einen Werkzeugeinsatz erfordert. Im in der Gebrauchsstellung angeordneten Zustand der Zusatz-Betätigungseinheit ist das Zusatz-Betätigungsglied derart antriebsmäßig mit dem Betätigungsendabschnitt des Betätigungsstößels gekoppelt oder koppelbar, dass sowohl eine Verschiebebewegung als auch eine Drehbewegung des Betätigungsendabschnittes des Betätigungsstößels durch entsprechende manuelle Betätigung des Zusatz-Betätigungsgliedes hervorrufbar ist.

Die Zusatz-Betätigungseinheit bietet insbesondere auch die Möglichkeit, durch entsprechende Gestaltung insbesondere des Zusatz-Betätigungsgliedes eine optimale Bedienbarkeit der Handhilfsbetätigungseinrichtung in solchen Fällen zu ermöglichen, in denen der Betätigungsendabschnitt aufgrund ungünstiger Platzverhältnisse am Einsatzort der Ventileinrichtung nur schwer zugänglich ist. Man kann quasi durch Einsatz der Zusatz-Betätigungseinheit eine Art "Verlängerung" des Betätigungsstößels vornehmen, um eine bequeme und sichere Bedienbarkeit zu gewährleisten.

Vorzugsweise besteht die Möglichkeit, die Ventileinrichtung wahlweise mit oder ohne installierte Zusatz-Betätigungseinheit zu betreiben. Bei nicht installierter Zusatz-Betätigungseinheit ist die Handhilfsbetätigungseinrichtung durch unmittelbare Betätigung des Betätigungsendabschnittes nutzbar. Bei installierter Zusatz-Betätigungseinheit lässt sich die Handhilfsbetätigungseinrichtung durch Betätigung des Zusatz-Betätigungsgliedes betreiben.

Vorteilhafte Weiterbildungen der Erfindung gehen aus den Unteransprüchen hervor.

Vorzugsweise ist die Handhilfsbetätigungseinrichtung so ausgebildet, dass der Betätigungsendabschnitt des Betätigungsstößels unabhängig von seiner Betriebsstellung stets vollständig innerhalb des zugeordneten Gehäuseteils angeordnet ist, während das Zusatz-Betätigungsglied einen zum werkzeuglosen manuellen Ergreifen stets frei zugänglichen Handhabungsabschnitt aufweist. Somit kann eine Ventileinrichtung zur Verfügung gestellt werden, bei der - je nachdem, ob die Zusatz-Betätigungseinheit angebracht ist oder nicht - die Drehverriegelung des Betätigungsstößels nur mittels eines geeigneten Werkzeuges oder manuell werkzeuglos hervorgerufen werden kann.

Das Zusatz-Betätigungsglied der Zusatz-Betätigungseinheit ist zum Hervorrufen der Verschiebebewegung des Betätigungsendabschnittes zweckmäßigerweise seinerseits verschiebbar ausgebildet. Außerdem ist das Zusatz-Betätigungsglied zum Hervorrufen der Drehbewegung des Betätigungsendabschnittes zweckmäßigerweise ebenfalls verdrehbar ausgebildet. Somit unterscheiden sich die Betätigungsbewegungen des Zusatz-Betätigungsgliedes nicht von denjenigen des Betätigungsendabschnittes des Betätigungsstößels der Handhilfsbetätigungseinrichtung.

Die Zusatz-Betätigungseinheit ist zweckmäßigerweise mit einem Halter ausgestattet, über den sie bei Einnahme der Gebrauchsstellung an dem die Handhilfsbetätigungseinrichtung aufnehmenden Gehäuseteil befestigt ist. Halter und Gehäuseteil sind insbesondere so aufeinander abgestimmt, dass der Halter bei Einnahme seiner Gebrauchsstellung lösbar am Gehäuseteil fixiert ist und bei Nichtbedarf problemlos wieder abgenommen werden kann. Letzteres ermöglicht eine beliebige Umrüstung der Ventileinrichtung je nach Anwendungsfall. Das Zusatz-Betätigungsglied ist zweckmäßigerweise an dem Halter seinerseits derart gehalten, dass es zur Ausführung der gewünschten Betätigungsbewegung relativ zu dem Halter bewegbar ist. Es ist insbesondere so am Halter gelagert, dass es bezüglich des Halters sowohl linear verschiebbar als auch um die Achse dieser Verschiebebewegung verdrehbar ist.

Es ist zweckmäßig, die Ventileinrichtung so auszubilden, dass der Halter ohne separate Befestigungselemente am Gehäuseteil befestigbar ist. In diesem Zusammenhang sind an dem Halter und an dem Gehäuseteil zweckmäßigerweise zur gegenseitigen Kooperation geeignete Rastverbindungsmittel ausgebildet, so dass der Halter im Rahmen einer Rastverbindung einfach, schnell und werkzeuglos am Gehäuseteil befestigt werden kann. Die Rastverbindungsmittel sind insbesondere so ausgebildet, dass sie eine lösbare Verrastung bewirken, so dass der Halter und mithin die gesamte Zusatz-Betätigungseinheit jederzeit auch wieder aus der Gebrauchsstellung entfernbar sind, so dass anschließend die Handhilfsbetätigungseinrichtung durch direkte Betätigung des Betätigungsendabschnittes bedienbar ist.

Vorzugsweise hat der Halter eine topfförmige oder kappenförmige Gestalt und verfügt über einen Boden und eine dem Boden gegenüberliegende Montageöffnung. Zur Montage am Gehäuseteil wird der Halter mit der Montageöffnung voraus auf eine den Betätigungsendabschnitt des Betätigungsstößels umschließende ringförmige Erhebung des Gehäuseteils aufgesetzt. Eventuell vorhandene Rastverbindungsmittel befinden sich zweckmäßigerweise an einer die Montageöffnung begrenzenden, vom Boden wegragenden Seitenwand des Halters. Der Boden weist vorzugsweise eine Durchbrechung auf, durch die das Zusatz-Betätigungsglied hindurchgreift. Der sich innerhalb des topfförmigen Halters erstreckende Längenabschnitt des Zusatz-Betätigungsgliedes kooperiert in der Gebrauchsstellung mit dem Betätigungsendabschnitt des Betätigungsstößels. Ein auf der entgegengesetzten Seite aus dem Halter herausragender Endabschnitt bildet einen Handhabungsabschnitt zur werkzeuglosen, manuellen Betätigung.

Das Zusatz-Betätigungsglied ist an dem Halter insbesondere sowohl linear verschiebbar als auch verdrehbar gehalten. Auf diese Weise kann an einem aus dem Halter herausragenden Handhabungsabschnitt rein manuell ohne Werkzeugeinsatz sowohl eine Verschiebebewegung als auch eine Drehbewegung des Zusatz-Betätigungsgliedes hervorgerufen werden.

Der Handhabungsabschnitt weist zweckmäßigerweise einen quer zur Drehachse des Zusatz-Betätigungsgliedes abstehenden Hebelarm auf, an dem sich das zur Drehbetätigung des Zusatzbetätigungsgliedes erforderliche Drehmoment sehr leicht einleiten lässt. Der Hebelarm lässt sich beispielsweise sehr bequem mit zwei Fingern einer Hand ergreifen und verschwenken. Vorzugsweise ist das Zusatz-Betätigungsglied so ausgebildet, dass es einen in der Gebrauchsstellung der Zusatz-Betätigungseinheit in koaxialer Verlängerung zu dem Betätigungsendabschnitt des Betätigungsstößels angeordneten bolzenförmigen Abtriebsabschnitt aufweist, der mit dem Betätigungsendabschnitt antriebsmäßig gekoppelt ist.

Eine vorteilhafte Bauform sieht vor, dass der Betätigungsendabschnitt des Betätigungsstößels an seiner äußeren Stirnfläche einen als Vertiefung ausgebildeten und vorzugsweise als Querschlitz gestalteten Drehwerkzeug-Angriffsabschnitt aufweist, an dem bei nicht installierter Zusatz-Betätigungseinheit ein Drehwerkzeug ansetzbar ist, um eine ein Verriegeln des Betätigungsstößels bewirkende Drehbewegung hervorzurufen. Durch drückende Beaufschlagung der äußeren Stirnfläche mittels eines Fingers oder auch mittels eines geeigneten Werkzeuges lässt sich die zum Verschieben des Betätigungsstößels in die Arbeitsstellung erforderliche Schubkraft einleiten. Der Drehwerkzeug-Angriffsabschnitt hat darüber hinaus auch eine Kopplungsfunktion bezüglich des Zusatz-Betätigungsgliedes, wenn die Zusatz-Betätigungseinheit in der Gebrauchsstellung angeordnet ist. In diesem Zusammenhang ist das Zusatz-Betätigungsglied zweckmäßigerweise mit einem Kupplungsfortsatz ausgestattet, der in einer die Übertragung eines Drehmomentes geeigneten Weise formschlüssig in den Drehwerkzeug-Angriffsabschnitt eingreift, wenn die Zusatz-Betätigungseinheit am Gehäuseteil der Ventileinrichtung angeordnet ist.

Bei in Gebrauchsstellung befindlicher Zusatz-Betätigungseinheit kann der Betätigungsstößel dadurch aus der Grundstellung in die Arbeitsstellung verschoben werden, dass auf das Zusatz-Betätigungsglied eine entsprechende Schubkraft manuell ausgeübt wird, so dass das Zusatz-Betätigungsglied in Richtung zu dem Betätigungsendabschnitt verschoben wird und Letzteren unter Umschalten des Betätigungsstößels vor sich herschiebt.

Die Ventileinrichtung ist zweckmäßigerweise mit Federmitteln ausgestattet, durch die der Betätigungsendabschnitt der Handhilfsbetätigungseinrichtung ständig in Richtung seiner Grundstellung vorgespannt ist. Auf diese Weise ist eine tastende Betätigung des Betätigungsstößels möglich, und zwar derart, dass er durch Aufbringen einer Schubkraft unter Überwindung der rückstellenden Kraft der Federmittel aus der Grundstellung in die Arbeitsstellung verschiebbar ist und - sofern keine Verriegelung stattfindet - durch die rückstellende Kraft der Federmittel wieder in die Grundstellung zurückbewegt wird, sobald die manuell aufgebrachte Schubkraft beziehungsweise Drückkraft wieder entfernt wird.

Die Handhilfsbetätigungseinrichtung ist zweckmäßigerweise dem Ventilglied eines elektrisch betätigbaren Vorsteuerventils der Ventileinrichtung zugeordnet, mit dem ein durch Fluidkraft betätigbares Hauptventil der Ventileinrichtung vorgesteuert betätigbar ist.

Nachfolgend wird die Erfindung anhand der beiliegenden zeichnung näher erläutert. In dieser zeigen:
- Figur 1: eine bevorzugte Ausführungsform der erfindungsgemäßen ventileinrichtung in einer perspektivischen Darstellung, wobei die Zusatz-Betätigungseinheit im deinstallierten Zustand gezeigt ist,
- Figur 2: die Ventileinrichtung aus Figur 1 in einem Längsschnitt gemäß Schnittlinie II-II aus Figur 1,
- Figur 3: eine Einzeldarstellung eines in der Ventileinrichtung der Figuren 1 und 2 enthaltenen Vorsteuerventils, das mit der Handhilfsbetätigungseinrichtung ausgestattet ist, wobei die Zusatz-Betätigungseinheit die installierte Gebrauchsstellung einnimmt,
- Figur 4: die Anordnung aus Figur 3 in einem anderen Betätigungszustand der Zusatz-Betätigungseinheit,
- Figur 5: die Anordnung aus Figur 4 in einem Längsschnitt gemäß Schnittlinie V-V,
- Figur 6: die Anordnung aus Figur 4 in einem Längsschnitt gemäß Schnittlinie VI-VI,

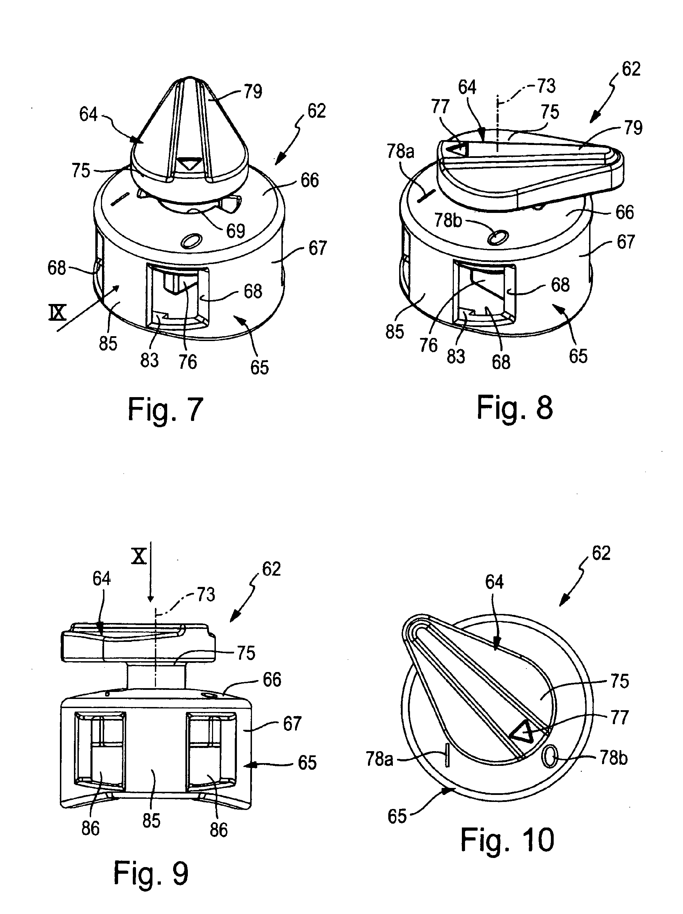

- Figur 7: eine perspektivische Einzeldarstellung einer bevorzugten Ausführungsform der Zusatz-Betätigungseinheit,
- Figur 8: die Zusatz-Betätigungseinheit aus Figur 5 aus einem anderen Blickwinkel in einem anderen Betätigungszustand,
- Figur 9: die Zusatz-Betätigungseinheit aus Figuren 7 und 8 in einer Seitenansicht mit Blickrichtung gemäß Pfeil IX aus Figur 7, und
- Figur 10: eine Draufsicht auf die Zusatz-Betätigungseinheit mit Blickrichtung gemäß Pfeil X aus Figur 9.

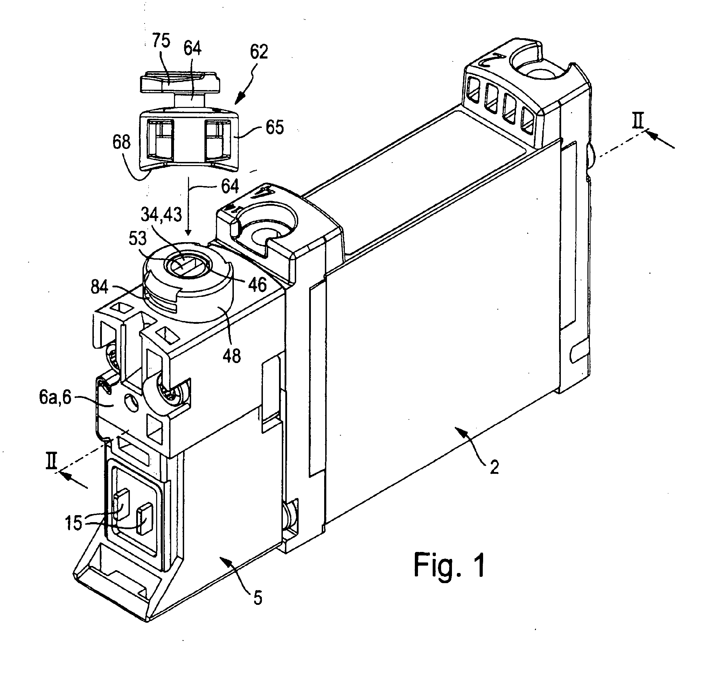

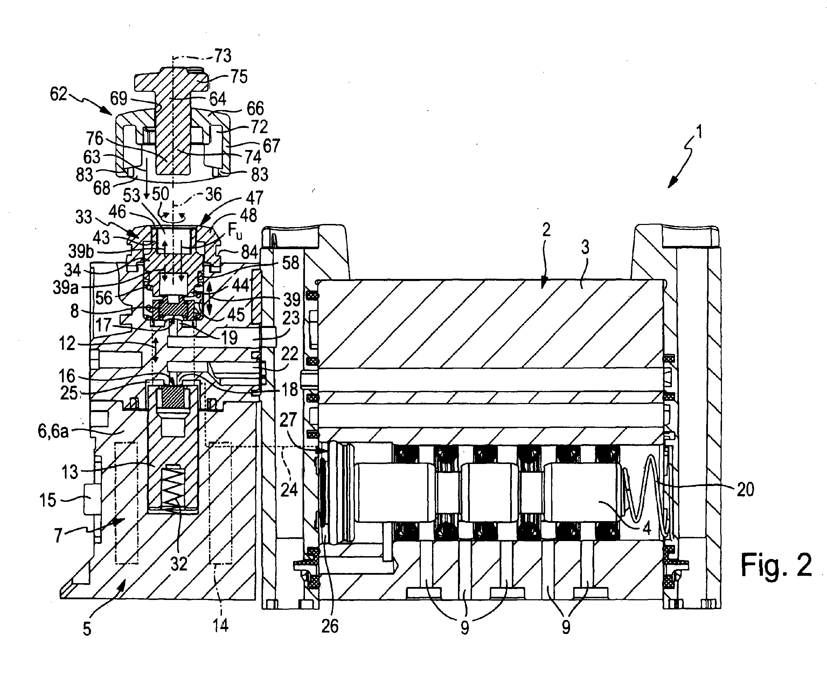

Die Figuren 1 und 2 illustrieren eine Ventileinrichtung 1 erfindungsgemäßer Bauart, die beispielhaft von einem vorgesteuerten Mehrwegeventil gebildet ist. Diese Ventileinrichtung 1 enthält ein im Folgenden als Hauptventil 2 bezeichnetes, indirekt elektrisch ansteuerbares Ventil, das über ein Hauptventilgehäuse 3 verfügt, in dem ein zwischen verschiedenen Schaltstellungen umschaltbarer Ventilschieber 4 angeordnet ist. Je nach Schaltstellung kann der Ventilschieber 4 diverse Hauptventilkanäle 9 in unterschiedlichem Muster miteinander verbinden und voneinander abtrennen, um gewisse Fluidströmungen zuzulassen oder zu unterbinden.

Unter den Hauptventilkanälen 9 befinden sich vorzugsweise ein mit einer Druckquelle verbindbarer Speisekanal, mindestens ein mit einer Drucksenke, zum Beispiel der Atmosphäre, verbindbarer Entlastungskanal und mindestens ein mit einem zu betätigenden Verbraucher verbindbarer Arbeitskanal. Der mindestens eine Arbeitskanal kann dann je nach Schaltstellung des Ventilschiebers 4 entweder mit dem Speisekanal oder mit einem Entlastungskanal verbunden werden.

Im unbetätigten Zustand des Hauptventils 2 nimmt der ventilschieber 4 beim Ausführungsbeispiel eine durch eine Rückstellfeder 20 vorgegebene erste Schaltstellung ein. An einer Stirnseite des Hauptventils 2 ist ein elektrisch betätigbares Vorsteuerventil 5 angeordnet, mit dessen Hilfe die Fluidbeaufschlagung des Ventilschiebers 4 steuerbar ist, um diesen bei Bedarf aus der ersten Schaltstellung unter Überwindung der Rückstellfeder 20 in eine zweite Schaltstellung umzuschalten und dort gegebenenfalls auch festzuhalten. Anstelle der Rückstellfeder 20 kann das Hauptventil 2 auch noch ein zweites Vorsteuerventil 5 aufweisen.

Das Vorsteuerventil 5 verfügt über ein Vorsteuerventilgehäuse 6a, das ein Gehäuseteil 6 der Ventileinrichtung 1 bildet. Es ist exemplarisch mittels nicht weiter abgebildeter Schrauben an dem Hauptventilgehäuse 3 befestigt.

Das Gehäuseteil 6 enthält oder trägt eine elektrische Antriebseinrichtung 7. Letzteres ist beim Ausführungsbeispiel als Elektromagneteinrichtung ausgebildet, so dass es sich bei dem Vorsteuerventil 5 exemplarisch um ein Magnetventil handelt.

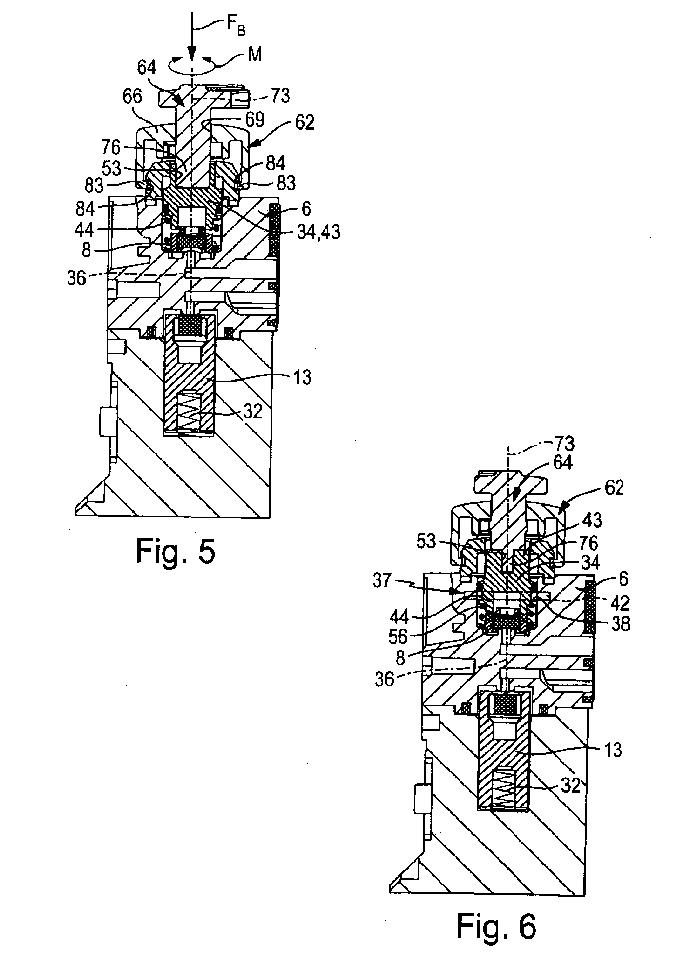

Die elektrische Antriebseinrichtung 7 kann derart elektrisch angesteuert werden, dass sie ein Ventilglied 8 des Vorsteuerventils 5 unter Ausführung einer linearen Umschaltbewegung 12 zwischen einer aus Figuren 2 und 5 ersichtlichen ersten Schaltstellung und einer diesbezüglich axial verschobenen, aus Figur 6 ersichtlichen zweiten Schaltstellung verlagert. Das Ventilglied 8 ist hierzu beim Ausführungsbeispiel ein integraler Bestandteil eines beweglichen Magnetankers 13 der Antriebseinrichtung 7, der durch elektrisches Erregen einer nur schematisch angedeuteten Spuleneinrichtung 14 der Antriebseinrichtung 7 verstellbar ist. Die hierfür erforderlichen elektrischen Betätigungssignale können über eine elektrische Schnittstelleneinrichtung 15 von außen her eingespeist werden.

Anstatt als Baueinheit, könnten das Ventilglied 8 und der Magnetanker 13 auch als gesonderte Teile ausgeführt sein, die auf beliebige weise antriebsmäßig miteinander verbunden sind.

Das bevorzugt stößelartig ausgebildete Ventilglied 8 verfügt über zwei mit axialem Abstand zueinander angeordnete und vorzugsweise einander zugewandte erste und zweite Dichtflächen 16, 17. Die erste Dichtfläche 16 liegt einem an dem Gehäuseteil 6 ausgebildeten ersten Ventilsitz 18 gegenüber, der die Mündung eines in dem Gehäuseteil 6 verlaufenden ersten Ventilkanals 22 umrahmt. Der zweiten Dichtfläche 17 liegt ein bevorzugt ebenfalls an dem Gehäuseteil 6 ausgebildeter zweiter Ventilsitz 19 gegenüber, der die Kanalmündung eines ebenfalls in dem Gehäuseteil 6 verlaufenden zweiten Ventilkanals 23 umrahmt.

Das Ventilglied 8 erstreckt sich in einer in dem Gehäuseteil 6 ausgebildeten Ventilkammer 25, die über einen nur gestrichelt angedeuteten dritten Ventilkanal 24 in ständiger Verbindung mit einer zu dem Hauptventil 2 gehörenden Antriebskammer 26 steht, die von einer mit dem Ventilschieber 4 antriebsmäßig verbundenen Antriebsfläche 27 begrenzt ist. Die Antriebsfläche 27 befindet sich vorzugsweise an einem Antriebskolben des Ventilschiebers 4.

Im Betrieb der Ventileinrichtung 1 steht der erste Ventilkanal 22 mit einer nicht weiter abgebildeten Druckquelle in Verbindung, insbesondere einer Druckluftquelle. Der zweite Ventilkanal 23 führt zu einer Drucksenke, insbesondere zur Atmosphäre. Hierzu münden der erste und zweite Ventilkanal 22, 23 an in der Zeichnung nicht ersichtlicher Stelle zu einer Außenfläche der Ventileinrichtung 1 aus.

Befindet sich das Ventilglied 8 in einer aus Figuren 2 und 5 ersichtlichen ersten Schaltstellung, steht die Antriebskammer 26 über den zweiten Ventilkanal 23 mit der Atmosphäre in Verbindung und ist folglich drucklos. Dadurch befindet sich auch der Ventilschieber 4 in seiner ersten Schaltstellung. Der erste Ventilkanal 22 ist dabei durch das Ventilglied 8 abgesperrt.

In der zweiten Schaltstellung des Ventilgliedes 8 ist die erste Dichtfläche 16 vom ersten Ventilsitz 18 abgehoben, während gleichzeitig die zweite Dichtfläche 17 am zweiten Ventilsitz 19 dichtend anliegt. Dadurch ist der zur Atmosphäre führende zweite Ventilkanal 23 abgesperrt und die Antriebskammer 26 ist über den ersten Ventilkanal 22 mit der zugeordneten Druckquelle verbunden. Auf diese Weise strömt Druckmedium in die Antriebskammer 26 ein und beaufschlagt die Antriebsfläche 27, so dass der Ventilschieber 4 in die zweite Schaltstellung bewegt wird.

Im deaktivierten Zustand der elektrischen Antriebseinrichtung 7 liegt die erste Schaltstellung des Ventilgliedes 8 vor, die zweckmäßigerweise durch eine das Ventilglied 8 ständig beaufschlagende Rückstellfedereinrichtung 32 aufrechterhalten wird. Um das Ventilglied 8 in die zweite Schaltstellung umzuschalten, ist folglich die Rückstellkraft der Rückstellfedereinrichtung 32 zu überwinden.

Zusätzlich zu der eine elektrische Ansteuerung ermöglichenden elektrischen Antriebseinrichtung 7 ist das Vorsteuerventil 5 mit einer Handhilfsbetätigungseinrichtung 33 ausgestattet. Sie ermöglicht es, das Ventilglied 8 ohne Mitwirkung der elektrischen Antriebseinrichtung 7 durch eine rein manuell aufzubringende Umschaltkraft Fu aus der ersten Schaltstellung in die zweite Schaltstellung zu verschieben und dort so lange wie gewünscht zu halten. Die Handhilfsbetätigungseinrichtung 33 wird vor allem zu Einrichtungszwecken genutzt, wenn durch manuelle Betätigung ausgewählte Betriebsvorgänge an einer zugeordneten Maschine oder Anlage ausgelöst werden sollen.

Die Handhilfsbetätigungseinrichtung 33 enthält einen in dem Gehäuseteil 6 in Achsrichtung einer Hauptachse 36 linear verschiebbar angeordneten Betätigungsstößel 34. Die Hauptachse 36 fällt zweckmäßigerweise mit der Längsachse des Betätigungsstößels 34 zusammen. Die mögliche Verschiebebewegung des Betätigungsstößels 34 ist in der Zeichnung durch einen Doppelpfeil bei 39 illustriert. Die Verschiebebewegung 39 kann in einer Aktivierungsrichtung 39a oder in einer diesbezüglich entgegengesetzten Deaktivierungsrichtung 39b orientiert sein. Der Betätigungsstößel 34 ist in axialer Verlängerung des Ventilgliedes 8 angeordnet und erstreckt sich in einer in dem Gehäuseteil 6 ausgebildeten Führungsausnehmung 45. In dieser Führungsausnehmung 45 ist er zur Ausführung der Verschiebebewegung 39 verschiebbar gelagert. Die Verschiebebewegung 39 und die Umschaltbewegung 12 haben die gleiche Ausrichtung.

Die Führungsausnehmung 45 mündet über eine Ausnehmungsmündung 46 zur Außenfläche 47 des Gehäuseteils 6 aus. Der Betätigungsstößel 34 ist so ausgebildet, dass er unabhängig von seiner momentanen Verschiebeposition vollständig innerhalb der Führungsausnehmung 45 zu liegen kommt und nicht aus der Führungsausnehmung 45 herausragt.

Die Ausnehmungsmündung 46 befindet sich zweckmäßigerweise an einer den Betätigungsstößel 34 konzentrisch umschließenden, ringförmigen Erhebung 48 des Gehäuseteils 6. Die ringförmige Erhebung 48 ist insbesondere ein an einer anderen Komponente des Gehäuseteils 6 fixierter Ringkörper. Er kann zur Montage und Demontage des Betätigungsstößels 34 abgenommen werden.

Der im Bereich der Ausnehmungsmündung 46 liegende äußere Endabschnitt des Betätigungsstößels 34 bildet einen für manuelle Beaufschlagung ausgelegten Betätigungsendabschnitt 43. Er ist über die Ausnehmungsmündung 46 von außen her zugänglich, um mit der schon erwähnten Umschaltkraft Fu drückend beaufschlagt werden zu können, so dass er eine Verschiebebewegung 39 in der Aktivierungsrichtung 39a in Richtung zu dem ihm axial innen vorgelagerten Ventilglied 8 ausführt.

Durch Federmittel 56 ist der Betätigungsstößel 34 in der Deaktivierungsrichtung 39b und mithin in eine unbetätigte Grundstellung vorgespannt. Diese unbetätigte Grundstellung ist in Figuren 2 und 5 ersichtlich. Diese Grundstellung ist durch Anschlagmittel definiert, die zweckmäßigerweise von der ringförmigen Erhebung 48 gebildet sind. Der Betätigungsstößel 34 kann somit durch die Ausnehmungsmündung 46 hindurch nicht aus der Führungsausnehmung 45 herausfallen.

Ausgehend von der Grundstellung kann der Betätigungsendabschnitt 43 und mithin der Betätigungsstößel 34 entgegen der Kraft der Federmittel 56 in eine axial tiefer in die Führungsausnehmung 35 hinein verschobene Arbeitsstellung verschoben werden. Die Verschieberichtung ist hierbei die Aktivierungsrichtung 39a. Bei dieser Verschiebebewegung 39 drückt der Betätigungsstößel 34 mit einem dem Ventilglied 8 zugewandten inneren Endabschnitt 44 gegen den ihm zugewandten Endabschnitt des Ventilgliedes 8 und verlagert selbiges aus der ersten Schaltstellung in die zweite Schaltstellung. Die Arbeitsstellung des Betätigungsstößels 34 liegt dann vor, wenn das Ventilglied 8 durch Anlage an dem zweiten Ventilsitz 19 die zweite Schaltstellung erreicht hat.

Dieser Betriebszustand bleibt erhalten, solange die manuelle Umschaltkraft Fu vorhanden ist. Wird diese Umschaltkraft Fu weggenommen, wird der Betätigungsstößel 34 gemeinsam mit seinem Betätigungsendabschnitt 43 durch die Federmittel 56 wieder nach außen in die Grundstellung zurückgeschoben. Hierbei folgt das Ventilglied 8 aufgrund der Rückstellkraft der Rückstellfeder 32 nach, bis es wieder in der ersten Schaltstellung angelangt ist.

Die Federmittel 56 befinden sich zweckmäßigerweise im Innern der Führungsausnehmung 45, wobei sie sich einerseits am Betätigungsstößel 34 und andererseits an einer axial innen liegenden Abschlusswand der Führungsausnehmung 45 abstützen.

Ein am Außenumfang des Betätigungsstößels 34 angeordneter Dichtungsring 58 liegt ständig dichtend an der Innenumfangsfläche der Führungsausnehmung 45 an und verhindert dadurch einen Fluidaustritt aus der Ventilkammer 25 durch die Ausnehmungsmündung 46 hindurch.

Bisher wurde erläutert, wie das Ventilglied 8 durch eine tastende Betätigung des Betätigungsendabschnittes 43 bei Bedarf vorübergehend aus der ersten in die zweite Schaltstellung umschaltbar ist. Die Handhilfsbetätigungseinrichtung 33 ist jedoch darüber hinaus so ausgelegt, dass der Betätigungsstößel 34 in der Arbeitsstellung mechanisch verriegelbar ist, so dass er auch bei Wegnahme der manuell aufgebrachten Umschaltkraft Fu in der Arbeitsstellung verbleibt.

Um diese Verriegelung zu ermöglichen, ist die Handhilfsbetätigungseinrichtung 33 mit Verriegelungsmitteln 37 ausgestattet, die vorzugsweise mindestens eine am Außenumfang des Betätigungsstößels 34 ausgebildete Quernut 38 enthalten und außerdem mindestens einen die Führungsausnehmung 45 nach Art einer Sekante im peripheren Randbereich durchquerenden Verriegelungsstift 42 (nur in Figur 6 ersichtlich).

Die Verriegelungsmittel 37 sind so angeordnet, dass die Quernut 38 in der Grundstellung des Betätigungsstößels 34 axial weniger tief in der Führungsausnehmung 45 angeordnet ist als der am Gehäuseteil 6 fixierte Verriegelungsstift 42. Ist der Betätigungsstößel 34 in die Arbeitsstellung verschoben, liegt die Quernut 38 axial auf gleicher Höhe mit dem Verriegelungsstift 42.

Mithin kann die Arbeitsstellung des Betätigungsstößels 34 dadurch verriegelt werden, dass der Betätigungsstößel 34 durch Beaufschlagung des Betätigungsendabschnittes 43 zunächst in der Aktivierungsrichtung 39a im Rahmen einer Verschiebebewegung 39 bis in die Arbeitsstellung verlagert wird, worauf er durch eine Drehbewegung so weit verdreht wird, dass der Verriegelungsstift 42 in die Quernut 38 eingreift. Genauer gesagt greift hierbei die Quernut 38 über den Verriegelungsstift 42 hinweg. Die zugehörige Drehbewegung des Betätigungsstößels 34 ist bei 50 durch einen Doppelpfeil kenntlich gemacht.

Durch den Eingriff des Verriegelungsstiftes 42 in die Quernut 38 ergibt sich in Achsrichtung der Hauptachse 36 eine formschlüssige Verriegelung, so dass der Betätigungsstößel 34 axial blockiert ist und selbst nach Wegnahme der Umschaltkraft Fu nicht durch die Federmittel 56 in die Grundstellung zurückgeschoben werden kann.

Zur Entriegelung des Betätigungsstößels 34 ist durch neuerliche Ausführung einer Drehbewegung 50 der Betätigungsendabschnitt 43 so weit zu verdrehen, dass Quernut 38 und Verriegelungsstift 42 wieder außer Eingriff gelangen. Jetzt können die Federmittel 56 den nicht mehr mit einer Umschaltkraft Fu beaufschlagten Betätigungsstößel 34 wieder in die Grundstellung nach außen schieben.

Die Drehbewegung 50 hat zweckmäßigerweise die Hauptachse 36 als Drehachse.

Das zum Hervorrufen der Drehbewegung 50 erforderliche Drehmoment kann wie die Umschaltkraft Fu an dem Betätigungsendabschnitt 43 von außen her eingeleitet werden. Zweckmäßigerweise enthält der Betätigungsendabschnitt 43 hierfür an seiner dem Ventilglied 8 entgegengesetzten äußeren Stirnfläche 52 einen insbesondere als axiale Vertiefung ausgebildeten Drehwerkzeug-Angriffsabschnitt 53, der exemplarisch als Querschlitz ausgeführt ist und das Ansetzen eines Schraubendrehers oder eines anderen Drehwerkzeuges gestattet. Ohne ein solches Drehwerkzeug lässt sich die Drehbewegung des Betätigungsstößels 34 nicht direkt ausführen, weil der Betätigungsendabschnitt 43 nicht nach außen über die Ausnehmungsmündung 46 vorsteht. Dies dient als Sicherheitsmaßnahme, da ein versehentliches, werkzeugloses Verdrehen und Verriegeln des Betätigungsstößels 34 ausgeschlossen ist.

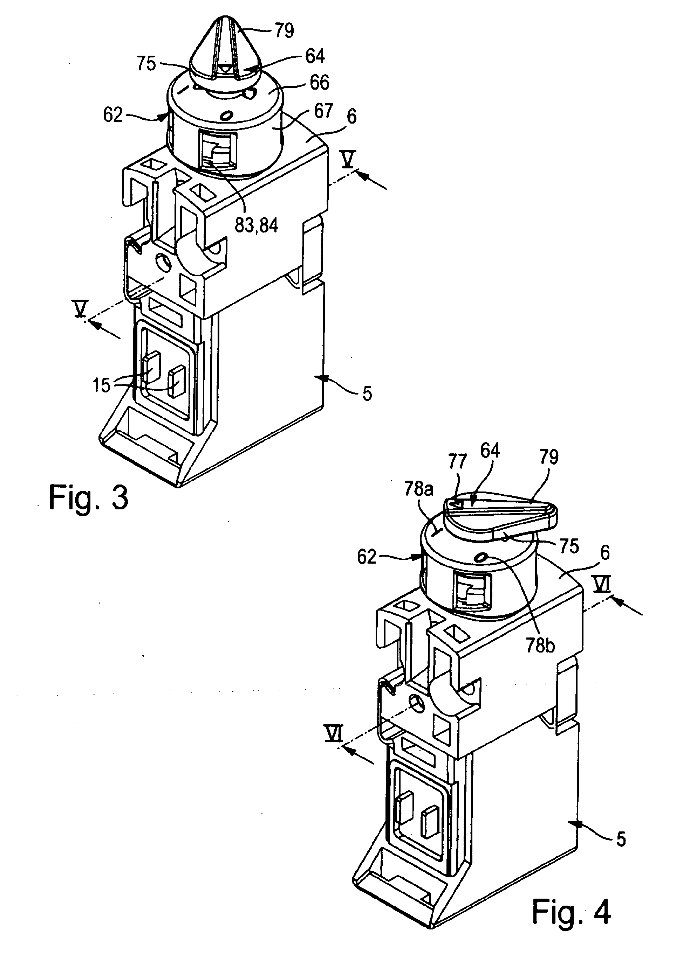

Die bisher beschriebenen direkten Betätigungsmöglichkeiten des Betätigungsendabschnittes 43 beziehungsweise des Betätigungsstößels 34 liegen vor, solange eine zu der Ventileinrichtung 1 gehörende Zusatz-Betätigungseinheit 62 nicht installiert ist. Die Zusatz-Betätigungseinheit 62 ist zweckmäßigerweise eine bezüglich des Gehäuseteils 6 separate Einheit und lässt sich bei Bedarf unter Einnahme einer aus Figuren 3 bis 6 ersichtlichen Gebrauchsstellung außen an dem Gehäuseteil 6 befestigen. In Figuren 1 und 2 ist mit 63 ein Montagepfeil bezeichnet, der angibt, wie die Zusatz-Betätigungseinheit 62 bei Bedarf an das Gehäuseteil 6 ansetzbar ist.

Die die Gebrauchsstellung einnehmende Zusatz-Betätigungseinheit 62 ermöglicht eine indirekte manuelle Betätigung des Betätigungsstößels 34, wobei sowohl die Verschiebebewegung 39 als auch die zur Verriegelung dienende Drehbewegung 50 allein mit der menschlichen Hand und ohne Zuhilfenahme eines Werkzeuges hervorgerufen werden kann.

Die Ventileinrichtung 1 hat somit zweckmäßigerweise einen modularen Aufbau, da sie es ermöglicht, die Handhilfsbetätigungseinrichtung 33 nach Bedarf mit der Zusatz-Betätigungseinheit 62 auszurüsten oder nicht. Solange der weiter oben erläuterte Sicherheitsaspekt vorherrschend ist, bleibt die Zusatz-Betätigungseinheit 62 vom Gehäuseteil 6 abgenommen, so dass nur die direkte Betätigungsmöglichkeit des Betätigungsendabschnittes 43 zur Verfügung steht. Besteht hingegen dahingehender Bedarf, den Betätigungsstößel 34 oftmals zu verriegeln und zu entriegeln, kann durch Montage der Zusatz-Betätigungseinheit 62 eine bequeme werkzeuglose, manuelle Verriegelung und Entriegelung vorgenommen werden, was die Handhabung sehr vereinfacht.

Die Zusatz-Betätigungseinheit 62 ist insbesondere lösbar am Gehäuseteil 6 der Ventileinrichtung 1 anbringbar oder angebracht. Eine solche lösbare Fixierung gestattet es jederzeit, die Zusatz-Betätigungseinheit 62 wieder zu entfernen, um dem geschilderten Sicherheitsaspekt erneut Rechnung zu tragen.

Es besteht allerdings auch die Möglichkeit, die Zusatz-Betätigungseinheit 62 unlösbar zu fixieren, so dass die einmal eingenommene Gebrauchsstellung nicht mehr aufgehoben werden kann. Hierzu kann die Zusatz-Betätigungseinheit 62 beispielsweise mit dem Gehäuseteil 6 unlösbar verrastet werden.

Die Zusatz-Betätigungseinheit 62 verfügt über ein manuell werkzeuglos betätigbares Zusatz-Betätigungsglied 64, das in der Gebrauchsstellung der Zusatz-Betätigungseinheit 62 in einer Weise antriebsmäßig mit dem Betätigungsendabschnitt 43 des Betätigungsstößels 34 koppelbar oder gekoppelt ist, dass durch eine Betätigung des Zusatz-Betätigungsgliedes 64 sowohl die Verschiebebewegung 39 als auch die Drehbewegung 50 des Betätigungsendabschnittes 43 hervorrufbar ist.

In vorteilhafter Ausgestaltung enthält die Zusatz-Betätigungseinheit 62 außer dem Zusatz-Betätigungsglied 64 auch noch einen Halter 65. Das Zusatz-Betätigungsglied 64 ist relativ zu dem Halter 65 bewegbar. Der Halter 65 hält dabei das Zusatz-Betätigungsglied 64 unverlierbar fest und fungiert außerdem als Bindeglied zum Gehäuseteil 6, indem die Zusatz-Betätigungseinheit 62 mittels des Halters 65 in der Gebrauchsstellung an dem Gehäuseteil 6 befestigt ist.

Beim Ausführungsbeispiel ist der Halter 65 topfförmig oder kappenförmig gestaltet, wobei er an einer axialen Oberseite einen Boden 66 aufweist, ausgehend von dem sich in axialer Richtung eine insbesondere ringförmig in sich geschlossene Seitenwand 67 erstreckt, die an der dem Boden 66 entgegengesetzten Unterseite des Halters 65 eine Montageöffnung 68 umrahmt.

Insbesondere zentral weist der Boden 66 eine Durchbrechung 69 auf, durch die das Zusatz-Betätigungsglied 64 hindurchgreift.

Das Zusatz-Betätigungsglied 64 hat einen sich in dem vom Boden 66 und von der Seitenwand 67 umgrenzten Innenraum 72 des Halters 65 in Achsrichtung einer Hochachse 73 des Halters 65 erstreckenden Abtriebsabschnitt 74 und außerdem einen auf der der Seitenwand 67 entgegengesetzten Axialseite aus dem Halter 65 herausragenden Handhabungsabschnitt 75.

Zur Montage am Gehäuseteil 6 wird die Zusatz-Betätigungseinheit 62 mit der Montageöffnung 68 voraus in der Montagerichtung 63 in koaxialer Verlängerung des Betätigungsstößels 64 an das Gehäuseteil 6 angesetzt, wobei der Halter 65 die ringförmige Erhebung 48 des Gehäuseteils 6 übergreift.

In der daraufhin eingenommenen Gebrauchsstellung der Zusatz-Betätigungseinheit 62 liegt insbesondere eine koaxiale Anordnung der Hauptachse 36 und der Hochachse 73 vor. Zweckmäßigerweise kommen der Abtriebsabschnitt 74 des Zusatz-Betätigungsgliedes 64 und der Betätigungsendabschnitt 43 in koaxialer Anordnung axial aufeinanderfolgend zu liegen.

Das Zusatz-Betätigungsglied 64 weist an dem dem Handhabungsabschnitt 75 entgegengesetzten freien Endbereich einen Kupplungsfortsatz 76 auf. Dieser Kupplungsfortsatz 76 greift in der Gebrauchsstellung der Zusatz-Betätigungseinheit 62 derart in den Drehwerkzeug-Angriffsabschnitt 53 des Betätigungsendabschnittes 43 ein, dass ein eine Drehmomentübertragung ermöglichender Formschluss vorliegt. Außerdem stützt sich der Abtriebsabschnitt 74 axial an dem Betätigungsendabschnitt 43 derart ab, dass er auf diesen eine drückende Kraft beziehungsweise eine Schubkraft übertragen kann.

Exemplarisch ist der Kupplungsfortsatz 76 als plattenförmige Abflachung vergleichbar der Spitze eines Schraubendrehers ausgebildet, die in den als Querschlitz gestalteten Drehwerkzeug-Angriffsabschnitt 53 formschlüssig eintaucht.

Das Zusatz-Betätigungsglied 64 ist an dem Halter 65 derart beweglich gehalten, dass es relativ zu dem Halter 65 zum einen in Achsrichtung der Hochachse 73 verschiebbar und zum anderen mit der Hochachse 73 als Drehachse verdrehbar ist. Diese Bewegungsmöglichkeiten seien im Folgenden als Betätigungsbewegungen bezeichnet und können durch manuelle Krafteinleitung in den Handhabungsabschnitt 75 hervorgerufen werden.

Das Zusatz-Betätigungsglied 64 kann mithin bezüglich des Halters 65 sowohl eine lineare Betätigungsbewegung in Achsrichtung der Hochachse 73 als auch eine rotative Betätigungsbewegung bezüglich der Hochachse 73 ausführen.

In der Gebrauchsstellung der Zusatz-Betätigungseinheit 62 eröffnet sich somit die Möglichkeit zu einer indirekten werkzeuglosen, manuellen Betätigung des Betätigungsstößels 34 durch wahlweise Ausführung einer linearen oder einer rotativen Betätigungsbewegung des Zusatz-Betätigungsgliedes 64. Die hierzu erforderliche Betätigungskraft lässt sich mit einem oder mehreren Fingern einer Hand äußerst bequem in den Handhabungsabschnitt 75 einleiten.

Um den Betätigungsstößel 34 bei in Gebrauchsstellung befindlicher Zusatz-Betätigungseinheit 62 aus der Grundstellung in die Arbeitsstellung zu verschieben, wird in den Handhabungsabschnitt 75 eine in der Aktivierungsrichtung 39a orientierte drückende Betätigungskraft F_{B} eingeleitet. Die Folge hiervon ist, dass das Zusatz-Betätigungsglied 64 in Richtung zum Betätigungsstößel 34 verschoben wird und dabei diesen Betätigungsstößel 34 bis zum Erreichen der Arbeitsstellung vor sich herschiebt.

Wird die drückende Betätigungskraft F_{B} anschließend wieder weggenommen, schiebt der von den Federmitteln 56 zurückgeschobene Betätigungsstößel 34 das Zusatz-Betätigungsglied 64 vor sich her, bis er wieder in der Grundstellung angelangt ist.

Somit ragt das Zusatz-Betätigungsglied 64 je nach Verschiebestellung unterschiedlich weit im Bereich des Bodens 66 aus dem Halter 65 heraus.

Um den Betätigungsstößel 34 zu verriegeln, wird in den Handhabungsabschnitt 75 ein ein Verdrehen des Zusatz-Betätigungsgliedes 64 bewirkendes Drehmoment M eingeleitet, nachdem zuvor das Zusatz-Betätigungsglied 64 durch Aufbringen der drückenden Betätigungskraft F_{B} so weit in den Halter 65 hineingedrückt wurde, dass der Betätigungsstößel 34 die Arbeitsstellung einnimmt. Aufgrund der drehfesten Verbindung zwischen dem Abtriebsabschnitt 74 und dem Betätigungsendabschnitt 43 wird das in den Handhabungsabschnitt 75 eingeleitete Drehmoment ohne weiteres auf den Betätigungsendabschnitt 43 des Betätigungsstößels 34 übertragen, so dass dieser ebenfalls verdreht wird, bis die Verriegelungsmittel 37 wirksam sind. Durch entgegengesetzte Drehbetätigung des Zusatz-Betätigungsgliedes 64 lässt sich die Verriegelung wieder aufheben.

Das Drehmoment M für die Drehbetätigung des Zusatz-Betätigungsgliedes 64 lässt sich besonders gut mit den Fingern einer Hand einleiten, wenn der Handhabungsabschnitt 75 einen quer und insbesondere rechtwinkelig von der Drehachse des Zusatz-Betätigungsgliedes 64 abstehenden Hebelarm 79 aufweist. Beim Ausführungsbeispiel ist dies der Fall.

Vorzugsweise trägt der Handhabungsabschnitt 75 eine Markierung 77, der zwei am Halter 65 und insbesondere an dessen Boden 66 ausgebildete Gegenmarkierungen 78a, 78b zugeordnet sind, wobei die Markierung 77 je nach Drehstellung des Handhabungsabschnittes 75 zur einen oder anderen Gegenmarkierung 78a, 78b weist. Auf diese Weise ist schon von weitem ersichtlich, ob der Betätigungsstößel 64 in der Arbeitsstellung verriegelt ist oder nicht.

Vorzugsweise sind an dem Halter 65 erste Rastverbindungsmittel 83 ausgebildet, die in der Gebrauchsstellung der Zusatz-Betätigungseinheit 62 mit an dem Gehäuseteil 6 angeordneten zweiten Rastverbindungsmitteln 84 in Rasteingriff stehen. Auf diese Weise kann der Halter 65 im Rahmen einer Rastverbindung sehr einfach ohne zusätzliche Befestigungselemente am Gehäuseteil 6 befestigt werden. Die Rastverbindungsmittel 83, 84 sind insbesondere so aufeinander abgestimmt, dass sie bei Bedarf auch wieder außer Eingriff miteinander gebracht werden können, um den Halter 65 und mithin die gesamte Zusatz-Betätigungseinheit 62 wieder aus der Gebrauchsstellung zu entfernen und vom Gehäuseteil 6 abzunehmen.

Exemplarisch bestehen die ersten Rastverbindungsmittel 83 aus mehreren im Bereich der Montageöffnung 68 an der Seitenwand 67 des Halters 65 angeordneten, nach innen ragenden Rastvorsprüngen, während die zweiten Rastverbindungsmittel 84 aus mindestens einer radial außen an der ringförmigen Erhebung 48 ausgebildeten Rastnut bestehen. Beim in der Montagerichtung 63 erfolgenden Aufstecken des Halters 65 auf die ringförmige Erhebung 48 schnappen die vorsprungartigen ersten Rastverbindungsmittel 83 in die zweiten Rastverbindungsmittel 84 ein.

Die ersten Rastverbindungsmittel 83 befinden sich zweckmäßigerweise an einem radial flexibel ausgebildeten Wandabschnitt 85 der Seitenwand 67, so dass die gewünschte Rastfunktion gewährleistet ist. Die Flexibilität lässt sich insbesondere dadurch realisieren, dass in der Seitenwand 67 in der Umfangsrichtung der Hochachse 73 beidseits des Wandabschnittes 85 je eine insbesondere fensterartig ausgebildete Wanddurchbrechung 86 vorhanden ist.

## Patentansprüche

1. Ventileinrichtung, mit einem durch elektrische Ansteuerung betätigbaren Ventil, das zur manuellen Betätigung mit einer Handhilfsbetätigungseinrichtung (33) ausgestattet ist, die einen beweglich in einem Gehäuseteil (6) der Ventileinrichtung (1) angeordneten Betätigungsstößel (34) aufweist, der über einen von außerhalb des Gehäuseteils (6) zugänglichen Betätigungsendabschnitt (43) verfügt und der zum einen durch eine Verschiebebewegung (39) des Betätigungsendabschnittes (43) zwischen einer unbetätigten Grundstellung und einer betätigten Arbeitsstellung umschaltbar ist und zum anderen durch eine Drehbewegung (50) des Betätigungsendabschnittes (43) in der Arbeitsstellung lösbar verriegelbar ist, und mit einer ein manuell betätigbares Zusatz-Betätigungsglied (64) aufweisenden Zusatz-Betätigungseinheit der Ventileinrichtung (62), die unter Einnahme einer Gebrauchsstellung derart außen an dem Gehäuseteil (6) anbringbar oder angeordnet ist, dass das Zusatz-Betätigungsglied (64) mit dem Betätigungsendabschnitt (43) des Betätigungsstößels (34) antriebsmäßig derart gekoppelt oder koppelbar ist, dass durch Betätigung des Zusatz-Betätigungsgliedes (64) die Verschiebebewegung des Betätigungsendabschnittes (43) hervorrufbar ist, **dadurch gekennzeichnet, dass** das Zusatz-Betätigungsglied (64) in der Gebrauchsstellung der Zusatz-Betätigungseinheit (62) in einer Weise antriebsmäßig mit dem Betätigungsendabschnitt (43) des Betätigungsstößels (34) gekoppelt oder koppelbar ist, dass durch manuelle, werkzeuglose Betätigung des Zusatz-Betätigungsgliedes (64) sowohl die Verschiebebewegung (39) als auch die Drehbewegung (50) des Betätigungsendabschnittes (43) hervorrufbar ist.

2. Ventileinrichtung nach Anspruch 1, **dadurch gekennzeichnet, dass** der Betätigungsendabschnitt (43) unabhängig von seiner Stellung stets vollständig innerhalb des Gehäuseteils (6) angeordnet ist und das Zusatz-Betätigungsglied (64) einen zum werkzeuglosen, manuellen Ergreifen frei zugänglichen Handhabungsabschnitt (75) aufweist.

3. Ventileinrichtung nach Anspruch 1 oder 2, **dadurch gekennzeichnet, dass** das Zusatz-Betätigungsglied (64) zum Hervorrufen der Verschiebebewegung (39) des Betätigungsendabschnittes (43) seinerseits verschiebbar und zum Hervorrufen der Drehbewegung (50) des Betätigungsendabschnittes (43) seinerseits verdrehbar ausgebildet ist.

4. Ventileinrichtung nach einem der Ansprüche 1 bis 3, **dadurch gekennzeichnet, dass** die Zusatz-Betätigungseinheit (62) einen Halter (65) aufweist, an dem das Zusatz-Betätigungsglied (64) bewegbar gehalten ist und mittels dem die Zusatz-Betätigungseinheit (62) bei Einnahme der Gebrauchsstellung an dem Gehäuseteil (6) befestigt ist.

5. Ventileinrichtung nach Anspruch 4, **dadurch gekennzeichnet, dass** der Halter (65) und das Gehäuseteil (6) derart aneinander angepasst sind, dass der Halter (65) in der Gebrauchsstellung lösbar an dem Gehäuseteil (6) fixiert ist.

6. Ventileinrichtung nach Anspruch 4 oder 5, **dadurch gekennzeichnet, dass** an dem Halter (65) und an dem Gehäuseteil (6) Rastverbindungsmittel (83, 84) zur verrastenden Befestigung des Halters (65) an dem Gehäuseteil (6) angeordnet sind.

7. Ventileinrichtung nach einem der Ansprüche 4 bis 6, **dadurch gekennzeichnet, dass** der Halter (65) topfförmig oder kappenförmig gestaltet ist, wobei er einen Boden (66) und eine dem Boden (66) axial gegenüberliegende Montageöffnung (68) aufweist und in der Gebrauchsstellung mit der Montageöffnung (68) voraus auf eine den Betätigungsendabschnitt (43) umschließende ringförmige Erhebung (48) des Gehäuseteils (6) aufgesetzt ist und wobei das Zusatz-Betätigungsglied (64) durch eine Durchbrechung (69) des Bodens (66) hindurchgreift.

8. Ventileinrichtung nach einem der Ansprüche 4 bis 7, **dadurch gekennzeichnet, dass** das Zusatz-Betätigungsglied (64) an dem Halter (65) einerseits verschiebbar und andererseits verdrehbar gehalten ist und mit einem Handhabungsabschnitt (75) über den Halter (65) vorsteht, an dem manuell eine Betätigungskraft sowohl zum Verschieben als auch zum Verdrehen des Zusatz-Betätigungsgliedes (64) einleitbar ist.

9. Ventileinrichtung nach Anspruch 8, **dadurch gekennzeichnet, dass** der Handhabungsabschnitt (75) einen quer zur Drehachse des Zusatz-Betätigungsgliedes (64) abstehenden Hebelarm (79) aufweist.

10. Ventileinrichtung nach einem der Ansprüche 4 bis 9, **dadurch gekennzeichnet, dass** das Zusatz-Betätigungsglied (64) einen in der Gebrauchsstellung der Zusatz-Betätigungseinheit (62) in koaxialer Verlängerung zu dem Betätigungsendabschnitt (43) angeordneten und insbesondere bolzenförmig ausgebildeten Abtriebsabschnitt (74) aufweist.

11. Ventileinrichtung nach einem der Ansprüche 1 bis 10, **dadurch gekennzeichnet, dass** der Betätigungsendabschnitt (43) an seiner dem Betätigungsendabschnitt (43) entgegengesetzten äußeren Stirnfläche (52) einen als Vertiefung ausgebildeten und vorzugsweise als Querschlitz gestalteten Drehwerkzeug-Angriffsabschnitt (53) aufweist, wobei das Zusatz-Betätigungsglied (64) über einen Kupplungsfortsatz (76) verfügt, der in der Gebrauchsstellung der Zusatz-Betätigungseinheit (62) in einer die Übertragung eines Drehmomentes ermöglichenden Weise formschlüssig in den Drehwerkzeug-Angriffsabschnitt (53) eingreift.

12. Ventileinrichtung nach einem der Ansprüche 1 bis 11, **dadurch gekennzeichnet, dass** sie Federmittel (56) aufweist, durch die der Betätigungsendabschnitt (43) ständig in Richtung seiner Grundstellung vorgespannt ist, insbesondere derart, dass der Betätigungsendabschnitt (43) durch Einleitung einer drückenden Betätigungskraft tastend in die Arbeitsstellung umschaltbar ist und nach Wegnahme der drückenden Betätigungskraft durch die Rückstellkraft der Federmittel (56) in die Grundstellung zurückkehrt.

13. Ventileinrichtung nach einem der Ansprüche 1 bis 12, **dadurch gekennzeichnet, dass** das Ventil ein indirekt elektrisch betätigbares Hauptventil (3) ist, dem mindestens ein direkt elektrisch betätigbares Vorsteuerventil (5) zugeordnet ist, das die Fluidbeaufschlagung eines Ventilschiebers (4) des Hauptventils (3) steuert und dessen Ventilglied (8) durch den Betätigungsstößel (34) der Handhilfsbetätigungseinrichtung (33) verstellbar ist.

## Claims

1. Valve device, with a valve actuable by means of electrical activation, which is equipped for manual actuation with a manual auxiliary actuating device (33), which has an actuating plunger (34) mounted in a casing part (6) of the valve device (1) and having an actuating end section (43) accessible from outside the casing part (6) and which on the one hand may be switched by a shifting movement (39) of the actuating end section (43) between an unactuated normal position and an actuated operating position, and on the other hand may be releasably locked in the operating position by a rotary movement (50) of the actuating end section (43), and with an additional actuating unit (62) of the valve device which has a manually actuable additional actuating element (64) which, on adopting a position of use, may be attached to or is fitted to the outside of the casing part (6) in such a way that the additional actuating element (64) is or may be coupled for drive purposes to the actuating end section (43) of the actuating plunger (34) in such a way that the shifting movement of the actuating end section (43) may be generated by actuation of the additional actuating element (64), **characterised in that** the additional actuating element (64), in the position of use of the additional actuating unit (62), is or may be connected for drive purposes to the actuating end section (43) of the actuating plunger (34), that through manual actuation, without tools, of the additional actuating element (64), both the shifting movement (39) and the rotary movement (50) of the actuating end section (43) may be generated.

2. Valve device according to claim 1, **characterised in that** the actuating end section (43) is always located, irrespective of its position, completely within the casing part (6), and the additional actuating element (64) has a handling section (75) freely accessible for manual gripping without tools.

3. Valve device according to claim 1 or 2, **characterised in that** the additional actuating element (64) is designed for its part to be movable to generate the shifting movement (39) of the actuating end section (43) and for its part to be rotatable to generate the rotary movement (50) of the actuating end section (43).

4. Valve device according to any of claims 1 to 3, **characterised in that** the additional actuating unit (62) has a holder (65) on which the additional actuating element (64) is movably held, and by means of which the additional actuating unit (62) is secured to the casing part (6) on adoption of the position of use.

5. Valve device according to claim 4, **characterised in that** the holder (65) and the casing part (6) are so matched to one another that, in the position of use, the holder (65) is releasably fixed to the casing part (6).

6. Valve device according to claim 4 or 5, **characterised in that** latching connection means (83, 84) are provided for fastening the holder (65) to the casing part (6) by latching.

7. Valve device according to any of claims 4 to 6, **characterised in that** the holder (65) is pot-shaped or cap-shaped, with a base (66) and an assembly opening (68) axially opposite the base (66), and in the position of use is slipped over an annular elevation (48) of the casing part (6) encompassing the actuating end section (43), with the assembly opening (68) leading, and wherein the additional actuating element (64) passes through a through opening (69) in the base (66).

8. Valve device according to any of claims 4 to 7, **characterised in that** the additional actuating element (64) is held on the holder (65) on the one hand so as to be capable of shifting and on the other hand so as to be rotatable, and protrudes beyond the holder (65) with a handling section (75) at which an actuating force may be initiated both to shift and also to rotate the additional actuating element (64).

9. Valve device according to claim 8, **characterised in that** the handling section (75) has a lever arm (79) projecting transversely to the axis of rotation of the additional actuating element (64).

10. Valve device according to any of claims 4 to 9, **characterised in that** the additional actuating element (64) has an output section (74), arranged in the position of use of the additional actuating unit (62) as a coaxial extension of the actuating end section (43) and in particular pin-shaped.

11. Valve device according to any of claims 1 to 10, **characterised in that** the actuating end section (43) has on its outer end face (52) opposite the actuating end section (43) a lathe tool application section (53) in the form of a recess and preferably in the form of a transverse slot, wherein the additional actuating element (64) has a coupling extension (76) which, in the position of use of the additional actuating unit (62), engages positively in the lathe tool application section (53) in a manner facilitating the transmission of a torque.

12. Valve device according to any of claims 1 to 11, **characterised in that** it has spring means (56) through which the actuating end section (43) is biased constantly in its normal position, in particular in such a way that the actuating end section (43) by initiating a pressuring actuating force may be switched tentatively into the operating position and after removal of the pressuring actuating force returns to the normal position due to the resetting force of the spring means (56).

13. Valve device according to any of claims 1 to 12, **characterised in that** the valve is an indirectly electrically actuable main valve (3), to which is assigned at least one directly electrically actuable pilot valve (5), which controls the fluidic pressurisation of a valve spool (4) of the main valve (3) and has a valve element (8) which is adjustable by means of the actuating plunger (34) of the manual auxiliary actuating device (33).

## Revendications

1. Dispositif formant soupape avec une soupape actionnable par commande électrique qui est équipée, pour l'actionnement manuel, d'un dispositif d'actionnement auxiliaire manuel (33) présentant un coulisseau d'actionnement (34) disposé de manière mobile dans une partie de boîtier (6) du dispositif formant soupape (1), lequel coulisseau dispose d'une section d'extrémité d'actionnement (43) accessible depuis l'extérieur de la partie de boîtier (6) et peut être commuté d'une part par un mouvement de coulissement (39) de la section d'extrémité d'actionnement (43) entre une position de base non actionnée et une position de travail actionnée et peut être verrouillé d'autre part de manière détachable par un mouvement de rotation (50) de la section d'extrémité d'actionnement (43) dans la position de travail, et avec une unité d'actionnement supplémentaire (62) présentant un organe d'actionnement supplémentaire (64) actionnable manuellement du dispositif formant soupape, laquelle unité peut être montée ou est disposée en occupant une position d'utilisation à l'extérieur sur la partie de boitier (6) de telle manière que l'organe d'actionnement supplémentaire (64) soit ou puisse être couplé en entraînement à la section d'extrémité d'actionnement (43) du coulisseau d'actionnement (34) de telle manière que le mouvement de coulissement de la section d'extrémité d'actionnement (43) puisse être suscité en actionnant l'organe d'actionnement supplémentaire (64), **caractérisé en ce que** l'organe d'actionnement supplémentaire (64) est ou peut être couplé en entraînement dans la position d'utilisation de l'unité d'actionnement supplémentaire (62) avec la section d'extrémité d'actionnement (43) du coulisseau d'actionnement (34) de manière que non seulement le mouvement de coulissement (39) mais aussi le mouvement de rotation (50) de la section d'extrémité d'actionnement (43) puissent être suscités par l'actionnement manuel sans outil de l'organe d'actionnement supplémentaire (64).

2. Dispositif formant soupape selon la revendication 1, **caractérisé en ce que** la section d'extrémité d'actionnement (43) est toujours disposée entièrement indépendamment de sa position dans la partie de boîtier (6) et l'organe d'actionnement supplémentaire (64) présente une section de manipulation (75) accessible librement pour la saisie manuelle sans outil.

3. Dispositif formant soupape selon la revendication 1 ou 2, **caractérisé en ce que** l'organe d'actionnement supplémentaire (64) est réalisé coulissant pour susciter le mouvement de coulissement (39) de la section d'extrémité d'actionnement (43) de son côté et rotatif pour susciter le mouvement de rotation (50) de la section d'extrémité d'actionnement (43) de son côté.

4. Dispositif formant soupape selon l'une quelconque des revendications 1 à 3, **caractérisé en ce que** l'unité d'actionnement supplémentaire (62) présente un support (65), sur lequel l'organe d'actionnement supplémentaire (64) est maintenu de manière mobile et à l'aide duquel l'unité d'actionnement supplémentaire (62) est fixée lors de l'occupation de la position d'utilisation sur la partie de boîtier (6).

5. Dispositif formant soupape selon la revendication 4, **caractérisé en ce que** le support (65) et la partie de boîtier (6) sont adaptés l'un à l'autre de telle manière que le support (65) soit fixé de manière détachable dans la position d'utilisation sur la partie de boîtier (6).

6. Dispositif formant soupape selon la revendication 4 ou 5, **caractérisé en ce que** des moyens de liaison d'encliquetage (83, 84) sont disposés sur le support (65) et sur la partie de boîtier (6) pour la fixation par encliquetage du support (65) sur la partie de boîtier (6).

7. Dispositif formant soupape selon l'une quelconque des revendications 4 à 6, **caractérisé en ce que** le support (65) est conçu en forme de pot ou de cuvette, celui-ci présentant un fond (66) et une ouverture de montage (68) en regard axialement par rapport au fond (66) et étant placé dans la position d'utilisation avec l'ouverture de montage (68) devant sur une élévation (48) annulaire entourant la section d'extrémité d'actionnement (43) de la partie de boîtier (6) et l'organe d'actionnement supplémentaire (64) pénétrant par un perçage (69) du fond (66).

8. Dispositif formant soupape selon l'une quelconque des revendications 4 à 7, **caractérisé en ce que** l'organe d'actionnement supplémentaire (64) est maintenu sur le support (65) d'une part de manière coulissante et d'autre part de manière rotative et dépasse du support (65) avec une section de manipulation (75), sur lequel une force d'actionnement peut être introduite manuellement non seulement pour le coulissement mais aussi pour la rotation de l'organe d'actionnement supplémentaire (64).

9. Dispositif formant soupape selon la revendication 8, **caractérisé en ce que** la section de manipulation (75) présente un bras de levier (79) dépassant transversalement à l'axe de rotation de l'organe d'actionnement supplémentaire (64).

10. Dispositif formant soupape selon l'une quelconque des revendications 4 à 9, **caractérisé en ce que** l'organe d'actionnement supplémentaire (64) présente une section de sortie (74) réalisée en particulier en forme de boulon et disposée dans la position d'utilisation de l'unité d'actionnement supplémentaire (62) en prolongement coaxial de la section d'extrémité d'actionnement (43).

11. Dispositif formant soupape selon l'une quelconque des revendications 1 à 10, **caractérisé en ce que** la section d'extrémité d'actionnement (43) présente sur sa surface avant (52) extérieure opposée à la section d'extrémité d'actionnement (43) une section de prise d'outil de rotation (53) réalisée comme une cavité et conçue de préférence comme une fente transversale, l'organe d'actionnement supplémentaire (64) disposant d'un prolongement de couplage (76) qui s'engage dans la position d'utilisation de l'unité d'actionnement supplémentaire (62), d'une manière permettant la transmission d'un couple, par complémentarité de formes dans la section de prise d'outil de rotation (53).

12. Dispositif formant soupape selon l'une quelconque des revendications 1 à 11, **caractérisé en ce qu'**il présente des moyens de ressort (56), par lesquels la section d'extrémité d'actionnement (43) est précontrainte en permanence en direction de sa position de base, en particulier de telle manière que la section d'extrémité d'actionnement (43) puisse être commutée par introduction d'une force d'actionnement par pression dans la position de travail et revienne dans la position de base après retrait de la force d'actionnement de pression par la force de rappel des moyens de ressort (56).

13. Dispositif formant soupape selon l'une quelconque des revendications 1 à 12, **caractérisé en ce que** la soupape est une soupape principale (3) actionnable électriquement indirectement, à laquelle est associée au moins une soupape de précommande (5) actionnable électriquement directement qui commande l'alimentation fluidique d'un coulisseau (4) de la soupape principale (3) et dont l'organe de soupape (8) peut être déplacé par le coulisseau d'actionnement (34) du dispositif d'actionnement auxiliaire manuel (33).
